# EUROPEAN PATENT APPLICATION

(11) **EP 1 884 807 A1**
(43) Date of publication of application: **06.02.2008**
(21) Application number: 05743618.0
(22) Date of filing: 26.05.2005
(51) Int. Cl.: G02B 5/30, C08F 20/36, G02F 1/13363

(54) **METHOD FOR PRODUCING OPTICALLY ANISOTROPIC MATERIAL**

(71) Applicant: Sony Chemical & Information Device Corporation, Tokyo 141-0032 (JP)
(72) Inventor: HANADA, Tsuneo, Kanuma-shi, Tochigi 3228501 (JP); SATO, Michio, Kanuma-shi, Tochigi 3228501 (JP); AKAMATSU, Tadashi, Kanuma-shi, Tochigi 3228501 (JP); SHI, Zemin, Kanuma-shi, Tochigi 3228501 (JP)
(74) Representative: Müller-Boré & Partner Patentanwälte
(86) International application number: PCT/JP2005/009620
(87) International publication number: WO 2006/126264

(57) **Abstract**

When an optically anisotropic material is manufactured, an optically anisotropic liquid crystal layer with good adhesion properties and without irregular alignment is formed on a substrate. The optically anisotropic material having the optically anisotropic liquid crystal layer formed on the substrate can be manufactured by subjecting the surface of the substrate to rubbing treatment, subjecting the rubbing-treated surface to surface treatment with the hydrolysate of an alkoxysilane compound, applying a polymerizable nematic liquid crystal composition to the surface-treated surface, subjecting the applied polymerizable liquid crystal composition to alignment treatment, and subjecting the polymerizable liquid crystal composition to curing treatment while the alignment state thereof is maintained, whereby the optically anisotropic liquid crystal layer is formed.

## Description

### TECHNICAL FIELD

The present invention relates to a method for manufacturing an optically anisotropic material.

### BACKGROUND ART

Film- or plate-like optically anisotropic materials, alone or in combination with other films, are widely used as retardation plates, viewing angle compensation plates, color compensation plates, and elliptically polarizing plates. Such optically anisotropic materials are manufactured by applying an ultraviolet ray-curable liquid crystalline monomer to a supporting substrate, aligning the monomer in nematic alignment, and applying ultraviolet rays to the monomer to fix the alignment state (Patent Document 1). In this case, in order to allow the liquid crystal to be in vertical alignment, a technique has been proposed in which a coating of a silane coupling agent having a long chain alkyl group is formed as an alignment film on a supporting substrate.

Meanwhile, a silane coupling agent is generally used to improve adhesion properties between an inorganic surface and an organic surface. Hence, when a silane coupling agent is used as an alignment film, the adhesion properties between a supporting substrate and a cured nematic liquid crystal layer are also expected to be improved.

[Patent document 1] Japanese Patent Application Laid-Open No. Hei 05-215921.

### DISCLOSURE OF THE INVENTION

### PROBLEMS TO BE SOLVED BY THE INVENTION

However, even when a silane coupling agent is applied to a supporting substrate, sufficient adhesion properties between the supporting substrate and a cured nematic liquid crystal layer are not always obtained. Moreover, a problem exists in that irregular alignment may occur in the cured nematic liquid crystal layer.

It is an object of the present invention to solve the foregoing problems in the conventional technology. More specifically, the object is to make it possible to form on a substrate an optically anisotropic liquid crystal layer with good adhesion properties and without irregular alignment during manufacturing of an optically anisotropic material.

### MEANS FOR SOLVING THE PROBLEMS

The present inventors have found that the above object can be achieved by applying a hydrolysate of an alkoxysilane compound to a supporting substrate before or after rubbing treatment.

Accordingly, the present invention provides a method for manufacturing an optically anisotropic material having an optically anisotropic liquid crystal layer formed on a substrate. The method comprises: subjecting a surface of the substrate to rubbing treatment; subjecting the rubbing-treated surface to surface treatment with a hydrolysate of an alkoxysilane compound; applying a polymerizable nematic liquid crystal composition to the surface-treated surface; aligning the applied polymerizable liquid crystal composition; and subjecting the polymerizable liquid crystal composition to curing treatment while the aligned state thereof is maintained, whereby the optically anisotropic liquid crystal layer is formed.

Moreover, the present invention provides a method for manufacturing an optically anisotropic material having an optically anisotropic liquid crystal layer formed on a substrate. The method comprises: subjecting a surface of the substrate to surface treatment with a hydrolysate of an alkoxysilane compound; subjecting the surface-treated surface to rubbing treatment; applying a polymerizable nematic liquid crystal composition to the rubbing-treated surface; aligning the applied polymerizable liquid crystal composition; and subjecting the polymerizable liquid crystal composition to curing treatment while the aligned state thereof is maintained, whereby the optically anisotropic liquid crystal layer is formed.

Furthermore, the present invention provides the optically anisotropic material obtained by the above manufacturing methods and also provides a liquid crystal display device comprising a liquid crystal panel and the optically anisotropic material provided on at least one side of the liquid crystal panel.

### EFFECTS OF THE INVENTION

In the method for manufacturing an optically anisotropic material of the present invention, a hydrolysate of an alkoxysilane compound is applied to a substrate. Therefore, an optically anisotropic liquid crystal layer with good adhesion properties and without irregular alignment can be formed on the substrate.

### BRIEF DESCRIPTION OF THE DRAWINGS

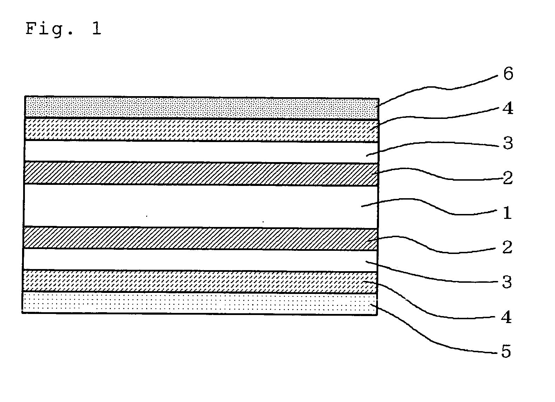

Fig. 1 is a schematic cross-sectional view of a liquid crystal display device.

### DESCRIPTION OF THE REFERENCE NUMERALS

- 1: liquid crystal panel
- 2: optically anisotropic film (viewing angle and color compensation film)
- 3: retardation plate 3
- 4: polarizing plate
- 5: backlight
- 6: hard coat layer

### BEST MODE FOR CARRYING OUT THE INVENTION

The present invention is a method for manufacturing an optically anisotropic material having an optically anisotropic liquid crystal layer formed on a substrate. This manufacturing method is broadly classified into two modes. In one mode, a substrate having been subjected to rubbing treatment is subjected to surface treatment by means of a particular technique. In the other mode, a substrate having been subjected to surface treatment by means of the particular technique is subjected to rubbing treatment. First, a description will be given of the mode in which a substrate having been subjected to rubbing treatment is subjected to surface treatment by means of a particular technique.

In the method for manufacturing an optically anisotropic material of the present invention, an optically anisotropic liquid crystal layer is formed by (1) subjecting the surface of a substrate to rubbing treatment, (2) subjecting the rubbing-treated surface to surface treatment with a hydrolysate of an alkoxysilane compound, (3) applying a polymerizable nematic liquid crystal composition to the surface-treated surface, (4) subjecting the applied polymerizable liquid crystal composition to alignment treatment, and (5) subjecting the polymerizable liquid crystal composition to curing treatment while the alignment state thereof is maintained.

(1) In this manufacturing method, the surface of the substrate is first subjected to rubbing treatment.

As the substrate, any substrate may be used so long as a coating of a polymerizable liquid crystal compound-containing composition can be formed on the surface thereof. Examples of the substrate which can be used include plastic films of polyimide, polyamide-imide, polyamide, polyetherimide, polyether ether ketone, polyether ketone, polyketone sulfide, polyether sulfone, norbornene-based copolymer resin (ARTON film), cycloolefin polymer (ZEONEX film), polysulfone, polyphenylene sulfide, polyphenylene oxide, polyethylene terephthalate, polybutylene terephthalate, polyethylene naphthalate, polyacetal, polycarbonate, polyallylate, acrylic resin, completely saponified polyvinyl alcohol, partially saponified polyvinyl alcohol, polypropylene, cellulose, unsaponified triacetyl cellulose (hereinafter, triacetyl cellulose may be referred to as TAC), triacetyl cellulose subjected to saponification treatment (which hereinafter may be referred to as saponified TAC), epoxy resin, phenol resin, or the like. These plastic films may be uniaxially stretched films or biaxially stretched films. Furthermore, the plastic films may be subjected to surface treatment such as hydrophilic treatment or hydrophobic treatment. Moreover, the plastic films may be laminated films. In place of the plastic films, other substrates may be used, including substrates of metal, such as aluminum, iron, or copper, with slit-like grooves formed on the surface thereof and substrates of glass, such as alkaline glass, borosilicate glass, or flint glass, with a surface etched in a slit-like pattern. The substrates used in the present invention include such metal substrates and glass substrates.

The rubbing treatment of the surface of the substrate may be carried out by providing an alignment film on the substrate in advance and rubbing the alignment film. However, in the manufacturing method of the present invention, the substrate may be directly subjected to rubbing treatment without providing an alignment film. Any known rubbing method can be employed as the rubbing treatment method. Preferred examples of the rubbing method include: a method in which rubbing cloth normally made of a material such as rayon, cotton, or polyamide is wound on a metal roll or the like and the roll is rotated and moved with the rubbing cloth contacting the substrate or the alignment film; and a method in which the substrate is moved while the roll is fixed. Examples of the material for the alignment film include polyimide, polyamide, and polyvinyl alcohol. Furthermore, depending on certain types of substrate, a silicon oxide film formed on the surface of the substrate by oblique deposition may be used as the alignment film.

(2) Next, the rubbing-treated surface of the substrate is subjected to surface treatment with a hydrolysate of an alkoxysilane compound.

The alkoxysilane compound which can be preferably used is a silane compound having 2 or 3, preferably 3, alkoxy groups such as methoxy and ethoxy groups having affinity with an inorganic surface. Commercially available silane coupling agents can be preferably used. As used herein, the "silane coupling agent" refers to a compound composed of an organic material and silicon and having two types of substituents with different reactivities in a molecule, i.e., having functional groups each having affinity or reactivity with inorganic materials.

Examples of such functional groups include an acryloxy group, a methacryloxy group, a mercapto group, an epoxy group, an amino group, a vinyl group, a styryl group, a chloropropyl group, an ureido group, and a sulfide group. These functional groups can be bound to a silicon atom with an alkenyl group or the like provided therebetween. For example, in the case of using a glass substrate, irregular alignment tends to occur when one of these functional groups is a vinyl group, and adhesion properties tend to decrease when one of these functional groups is a styryl group, a chloropropyl group, an ureido group, or a sulfide group. Therefore, an acryloxy group, a methacryloxy group, a mercapto group, and an epoxy group are particularly preferred. Furthermore, in the case of using a saponified TAC substrate, adhesion properties tend to decrease and irregular alignment tends to occur when one of these functional groups is a vinyl group, a styryl group, or a mercapto group. Also in this case, when one of these functional groups is an epoxy group, a chloropropyl group, an ureido group, or a sulfide group, adhesion properties tend to decrease. Therefore, an acryloxy group, a methacryloxy group, and an amino group are particularly preferred.

Specific examples of the alkoxysilane compound which can be used in the present invention include 3-acryloxypropyltrimethoxysilane, 3-methacryloxypropyltrimethoxysilane, 3-mercaptopropyltrimethoxysilane, 3-glycidoxypropyltrimethoxysilane, and 3-aminopropyltrimethoxysilane.

The hydrolysate of the alkoxysilane compound is obtained by adding 1 part by weight of the alkoxysilane compound to 0.1 to 50 parts by weight of an acidic aqueous solution containing 0.01 to 5 wt% of a weak acid, preferably such as acetic acid, and stirring the mixture under the condition of 60°C for 2 hours to hydrolyze the alkoxysilane compound. The main components of the hydrolysate of the alkoxysilane compound are siloxane oligomers having a polymerization degree of 2 to 25. The as-obtained aqueous solution of the hydrolysate of the alkoxysilane compound without isolation can be used for surface treatment. Furthermore, this aqueous solution can be used after being diluted with an organic solvent such as alcohol, methanol, acetone, or ethyl acetate.

The surface treatment can be carried out by using different methods in which the hydrolysate of the alkoxysilane compound is allowed to adhere uniformly to the surface of the substrate. Examples of such methods include: a method in which after the substrate is immersed in an aqueous solution of the hydrolysate of the alkoxysilane compound, the substrate is pulled out of the aqueous solution and dried in a thermostatic bath at 60 to 130°C; and a method in which an aqueous solution of the hydrolysate of the alkoxysilane compound is sprayed on the surface of the substrate and is then dried in a thermostatic bath at 60 to 130°C.

(3) Next, a polymerizable nematic liquid crystal composition is applied to the surface-treated surface of the substrate having been subjected to surface treatment with the hydrolysate of the alkoxysilane compound. More specifically, the polymerizable nematic liquid crystal composition may be applied to the surface-treated surface of the substrate by means of a known application method such as a spin coating method, a roll coating method, a printing method, a dipping-pulling up method, or a curtain coating (die coating) method. Normally, after the application, the liquid crystal composition is dried by means of a routine method. No particular limitation is imposed on the drying conditions. Any conditions may be selected so long as the organic solvent can be removed without causing the coating layer to flow or stream out. For example, the solvent can be removed by means of air drying at room temperature, drying on a hot plate, drying in a drying furnace, blowing warm air or hot air, or the like.

As the polymerizable liquid crystal compound used in the polymerizable liquid crystal composition, there may be preferably used a known polymerizable discotic liquid crystal compound or a known polymerizable rod-like smectic liquid crystal compound, each of which can assume homeotropic alignment and has a polymerizable group such as a (meth)acryloyl group (the generic name for an acryloyl group and a methacryloyl group), a vinyl group, an allyl group, an epoxy group, a phthalimide group, or a cinnamoyl group. For example, there may be used a photocurable polymerizable liquid crystal compound in which the structure of its molecule, such as a biphenyl derivative, a phenylbenzoate derivative, a stilbene derivative, a triphenylene derivative, or a truxene derivative, contains a group which can induce a homeotropic alignment. Examples of such a group include aromatic groups having a bulky substituent at the terminal end thereof, aromatic groups having a long chain alkyl group, and aromatic groups having a fluorine atom. Particularly preferred examples of the polymerizable liquid crystal compound include: compounds disclosed in paragraphs 0005 to 0007 in Japanese Patent Application Laid-Open No. 2001-55573 and represented by the general formulas (1) and (2), respectively; and compounds disclosed in paragraphs 0049 to 0050 in Japanese Patent Application Laid-Open No. 2000-98134 and represented by the general formulas (3) to (9), respectively. Hence, the polymerizable liquid crystal composition used in the present invention contains at least two polymerizable liquid crystal compounds, and at least one of the compounds is any of the polymerizable liquid crystal compounds represented by the respective formulas (1) to (9). The compound of the general formula (2) is a rod-like polymerizable smectic liquid crystal compound which itself can assume homeotropic alignment. Conversely, the compound represented by the general formula (1) alone does normally not exhibit liquid crystallinity. However, when the compound of the formula (1) and the compound of the formula (2) are used together, i.e. used as a mixed composition, the mixed composition as a whole exhibits liquid crystallinity.

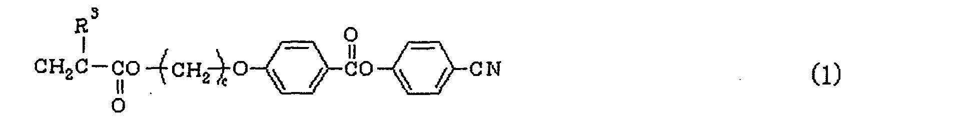

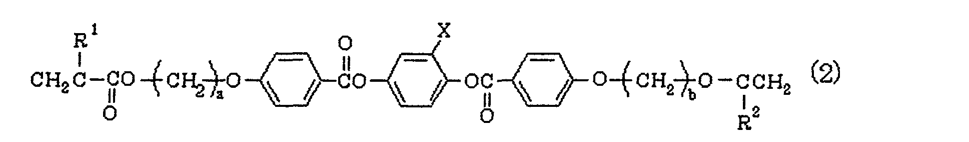

In the general formulas (1) and (2), R¹, R², and R³ are each independently hydrogen or a methyl group, X is one selected from the group consisting of hydrogen, chlorine, bromine, iodine, an alkyl group having 1 to 4 carbon atoms, a methoxy group, a cyano group, and a nitro group, and a, b, and c are each independently an integer of 2 to 12.

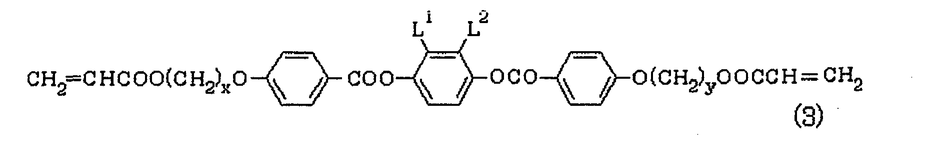

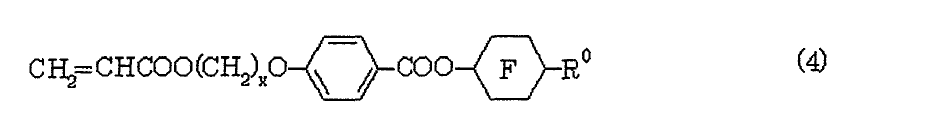

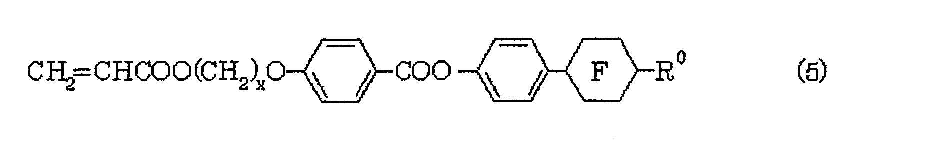

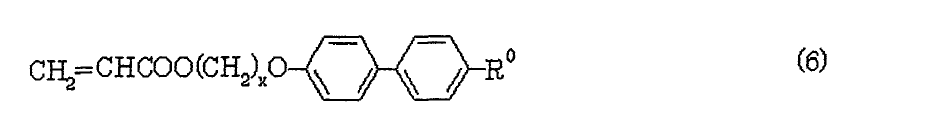

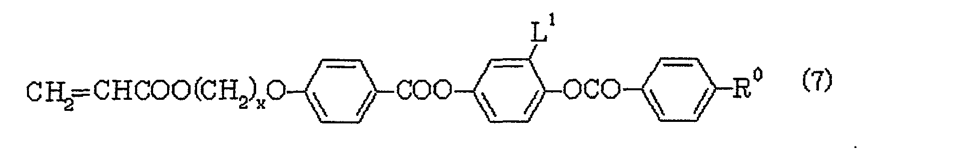

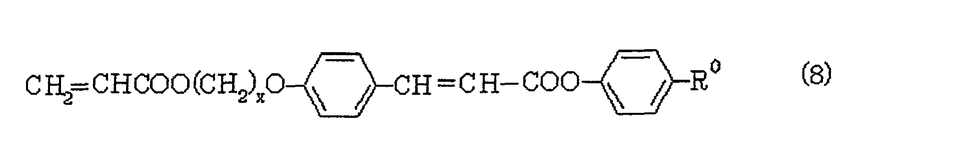

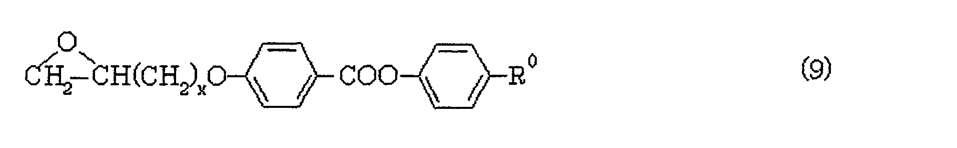

In the general formulas (3) to (9), F is a 1,4-phenylene or 1,4-cyclohexylene group, R° is a halogen, a cyano group, or an optionally halogenated C1-C12 alkyl or alkoxy group optionally substituted with a polymerizable terminal group, L¹ and L² are each independently a hydrogen atom, a fluorine atom, a chlorine atom, or a cyano group, or each independently an optionally halogenated C1-C7 alkyl, alkoxy, or alkanoyl group, and x and y are each independently an integer of 1 to 12.

Specific examples of the compounds of the formulas (1) to (9) include compounds described in paragraphs 0074 to 0076 in Japanese Patent Application Laid-Open No. 2003-251643 and represented by the following formulas (10) to (13) :

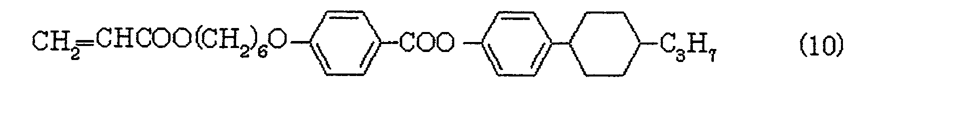

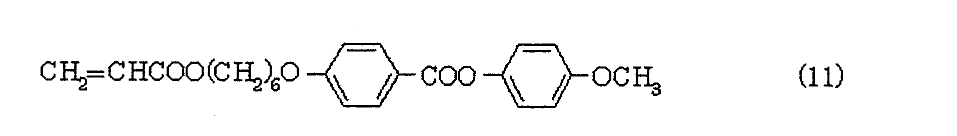

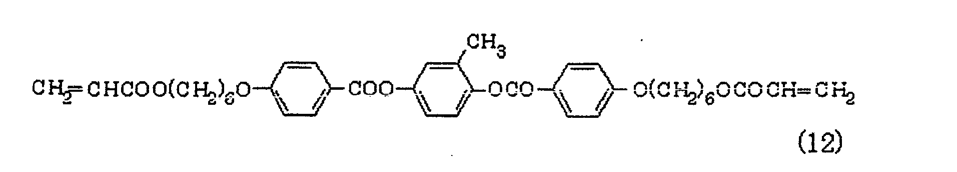

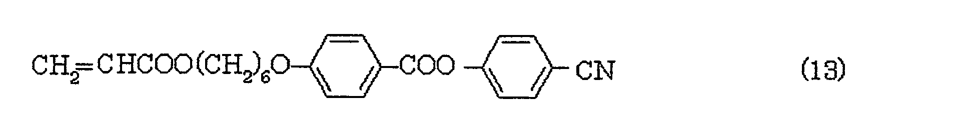

To the polymerizable liquid crystal composition used in the present invention, a non-liquid crystalline polymerizable compound which can be copolymerized with the polymerizable liquid crystal compound contained in the composition may be added within the range which does not impair the effect of the present invention, i.e., in an amount of normally 40% by weight or less, preferably 30% by weight or less, and more preferably 20% by weight or less. Examples of the polymerizable compound include photopolymerizable compounds having an acrylic group or a methacrylic group and photopolymerizable compounds and compositions including: polyester(meth)acrylates obtained by reacting (meth)acrylic acid with a polyester prepolymer of a polyol with a monobasic acid or polybasic acid; polyurethane(meth)acrylates obtained by reacting a polyol group with a compound having two isocyanate groups and thereafter reacting with (meth)acrylic acid; and epoxy(meth)acrylates obtained by reacting (meth)acrylic acid with an epoxy resin such as a bisphenol A-type epoxy resin, a bisphenol F-type epoxy resin, a novolac-type epoxy resin, a polycarboxylic acid polyglycidyl ester, a polyol polyglycidyl ether, a fatty acid or alicyclic epoxy resin, an amine epoxy resin, a triphenolmethane-type epoxy resin, or a dihydroxybenzene-type epoxy resin.

Furthermore, a photoreaction initiator may be appropriately added to the polymerizable liquid crystal composition used in the present invention in accordance with need. No particular limitation is imposed on the photoreaction initiator. Examples of the photoreaction initiator include benzil (also known as bibenzoyl), benzoyl ether, benzoin isobutyl ether, benzoin isopropyl ether, benzophenone, benzoylbenzoic acid, methyl benzoylbenzoate, 4-benzoyl-4'-methyldiphenylsulfide, benzyl methyl ketal, dimethylaminomethyl benzoate, 2-n-butoxyethyl-4-dimethylaminobenzoate, isoamyl p-dimethylaminobenzoate, 3,3'-dimethyl-4-methoxybenzophenone, methyl benzoylformate, 2-methyl-1-(4-(methylthio)phenyl)-2-morpholinopropane-1-one, 2-benzyl-2-dimethylamino-1-(4-morpholinophenyl)-butane-1-one, 1-(4-dodecylphenyl)-2-hydroxy-2-methylpropane-1-one, 1-hydroxycyclohexyl phenyl ketone, 2-hydroxy-2-methyl-1-phenylpropane-1-one, 1-(4-isopropylphenyl)-2-hydroxy-2-methylpropane-1-one, 2-chlorothioxanthone, 2,4-diethylthioxanthone, 2,4-diisopropylthioxanthone, 2,4-dimethylthioxanthone, isopropylthioxanthone, and 1-chloro-4-propoxythioxanthone

The added amount of the photoreaction initiator is normally 0.01 to 20 parts by weight, preferably 0.1 to 10 parts by weight, and more preferably 0.5 to 5 parts by weight with respect to 100 parts by weight of the polymerizable liquid crystal composition.

To the polymerizable liquid crystal composition used in the present invention, a sensitizing agent may be added within the range which does not impair the effect of the present invention.

Furthermore, to the polymerizable liquid crystal composition used in the present invention, an organic solvent may be added in accordance with need. The use of the organic solvent can facilitate the formation of the coating of the polymerizable liquid crystal composition. Examples of such an organic solvent include: hydrocarbons such as cyclohexane, cyclopentane, benzene, toluene, xylene, n-butylbenzene, diethylbenzene, and tetralin; ethers such as methoxybenzene, 1,2-dimethoxybenzene, and diethylene glycol dimethyl ether; ketones such as acetone, methyl ethyl ketone, methyl isobutyl ketone, cyclohexanone, and 2,4-pentanedione; esters such as ethyl acetate, ethylene glycol monomethyl ether acetate, propylene glycol monomethyl ether acetate, propylene glycol monoethyl ether acetate, and γ-butyrolactone; amide-based solvents such as 2-pyrrolidone, N-methyl-2-pyrrolidone, dimethylformamide, and dimethylacetamide; halogen-based solvents such as chloroform, dichloromethane, carbon tetrachloride, dichloroethane, tetrachloroethane, trichloroethylene, tetrachloroethylene, chlorobenzene, and orthodichlorobenzene; alcohols such as t-butyl alcohol, diacetone alcohol, glycerin, monoacetin, ethylene glycol, triethylene glycol, hexylene glycol, ethylene glycol monomethyl ether, ethyl cellosolve, and butyl cellosolve; and phenols such as phenol and parachlorophenol. A suitable organic solvent is selected from the above solvents in view of the solvent-resistance of a base film or the like. Furthermore, these solvents may be preferably used as a single solvent or as a mixed solvent prepared by mixing two or more solvents. In the present invention, the use amount of the organic solvent in the polymerizable liquid crystal composition depends on the solubility of the polymerizable liquid crystal compound and the thickness of the optically anisotropic liquid crystal layer and is normally 1 to 60% by weight, and preferably 3 to 40% by weight.

Furthermore, in order to improve the ease of application, a surfactant or the like may be appropriately added to the polymerizable liquid crystal composition within the range which does not impair the effect of the present invention. Examples of the surfactant include: cationic surfactants such as imidazoline, quaternary ammonium salts, alkylamine oxides, and polyamine derivatives; anionic surfactants such as polyoxyethylene-polyoxypropylene condensate, primary or secondary alcohol ethoxylates, alkylphenol ethoxylates, polyethylene glycol and esters thereof, sodium lauryl sulfate, ammonium lauryl sulfate, amine lauryl sulfates, alkyl-substituted aromatic sulfonates, alkyl phosphates, and formalin condensates of aliphatic or aromatic sulfonic acids; amphoteric surfactants such as lauryl amido propyl betaine and lauryl amino betaine acetate; nonionic surfactants such as polyethylene glycol fatty acid esters and polyoxyethylene alkyl amines; and fluorine-based surfactants such as perfluoroalkyl sulfonates, perfluoroalkyl carbonates, perfluoroalkyl ethylene oxide adducts, perfluoroalkyl trimethyl ammonium salts, perfluoroalkyl group- and hydrophilic group-containing oligomers, perfluoroalkyl group- and lipophilic group-containing oligomers, and perfluoroalkyl group-containing urethanes.

The added amount of the surfactant depends on the type of the surfactant, the compositional ratio of the components of a composition for forming a liquid crystal film, the type of the solvent, the type of a base film, and the like. The added amount is normally 10 ppm to 10%, preferably 100 ppm to 5%, and more preferably 0.1% to 1% with respect to 100 parts by weight of the polymerizable liquid crystal composition.

(4) Next, the applied polymerizable nematic liquid crystal compound is subjected to alignment treatment. Examples of the alignment method include a method in which a coating of the polymerizable liquid crystal composition is subjected to heat treatment. Specific examples include: a method in which the coating is heated to a temperature at which the polymerizable liquid crystal composition is in a nematic liquid crystal phase to allow the nematic liquid crystal alignment phase to form; and a method in which the composition is brought into an isotropic liquid state by heating the coating to a temperature of about 40°C higher than the temperature range in which the polymerizable liquid crystal composition is in the nematic liquid crystal phase, and then is cooled to allow the nematic liquid crystal alignment phase to form.

(5) Next, the coating of the aligned polymerizable liquid crystal composition is subjected to curing treatment to fix the liquid crystal alignment, whereby the optically anisotropic liquid crystal layer is formed. In this manner, an optically anisotropic material can be obtained which has the optically anisotropic liquid crystal layer formed on the substrate and which has a film-like, sheet-like, or plate-like shape.

The curing treatment of the coating of the aligned polymerizable nematic liquid crystal composition can be carried out by applying an electromagnetic wave to the coating. No particular limitation is imposed on the wavelength of the electromagnetic wave used for the curing treatment, and the electromagnetic wave may be appropriately selected from electron rays, ultraviolet rays, visible rays, infrared rays (heat rays), and the like. Moreover, the irradiation energy, irradiation temperature, irradiation atmosphere, irradiation time, and the like may be appropriately determined according to the mixing components of the polymerizable liquid crystal composition and the like.

In the optically anisotropic material obtained by the manufacturing method of the present invention described above, the optically anisotropic liquid crystal layer in which nematic alignment, preferably nematic horizontal alignment, is fixed on the substrate is formed with good adhesion properties and without irregular alignment.

The manufacturing method of the present invention described above is a method characterized in that the substrate having been subjected to rubbing treatment is subjected to surface treatment with the hydrolysate of the alkoxysilane compound. However, a substrate before rubbing treatment may be subjected to surface treatment with the hydrolysate of the alkoxysilane compound and thereafter may be subjected to rubbing treatment. This mode is also included in the present invention.

Accordingly, the present invention also provides a method for manufacturing an optically anisotropic material having an optically anisotropic liquid crystal layer formed on a substrate. The method comprises: subjecting a surface of the substrate to surface treatment with a hydrolysate of an alkoxysilane compound; subjecting the surface-treated surface to rubbing treatment; applying a polymerizable liquid crystal compound-containing composition to the rubbing-treated surface; subjecting the applied polymerizable nematic liquid crystal composition to alignment treatment; and subjecting the polymerizable liquid crystal composition to curing treatment while the aligned state thereof is maintained, whereby the optically anisotropic liquid crystal layer is formed. The individual components in this manufacturing method are the same as the corresponding components described in the above-described manufacturing method of the present invention.

The optically anisotropic material obtained by the manufacturing methods of the present invention can be utilized in various fields of optics. For example, the optically anisotropic material can be used as a viewing angle compensation film in twisted nematic-type liquid crystal display devices (hereinafter, referred to as TN-LCDs). Furthermore, the optically anisotropic material in combination with a polarizing plate disposed in various LCDs can be preferably used as an elliptically polarizing plate. Hence, for example, a color-compensated or viewing angle-increased liquid crystal display device can be constituted by providing the optically anisotropic material of the present invention on at least one side of a known liquid crystal panel. A more specific configuration example of such a liquid crystal display device is shown in Fig. 1 as reference. This liquid crystal display device has a structure in which the optically anisotropic film 2 of the present invention is provided as a viewing angle enlarging film or a color compensation film on both sides of a known liquid crystal panel 1 and in which a known retardation plate 3 and a known polarizing plate 4 are provided on both the sides. Further, in this structure, a known backlight 5 is provided on the rear side of the liquid crystal panel 1, and a known hard coat layer 6 is provided on the front side.

### EXAMPLES

Hereinafter, the present invention is described more specifically by way of Examples.

### Example 1

### (Preparation of the hydrolysate of a silane coupling agent)

1 part by weight of an acryloxy group-containing trimethoxysilane-based coupling agent (KBM-5103 (3-acryloxypropyltrimethoxysilane), Shin-Etsu Chemical Co., Ltd.) was mixed with 10 parts by weight of a 1% aqueous solution of acetic acid. Then, the mixture was stirred at 60°C for 2 hours to give a clear aqueous solution. The solution was subjected to gel permeation chromatography, and it was found that the solution contained 98% polysilanol oligomers having polymerization degrees of 2 to 25 (i.e., dimers to 25-mers). In addition, the solution contained 2% monomer.

The obtained clear aqueous solution was diluted with methanol such that the concentration of the solid content was 2%, whereby the hydrolysate of the silane coupling agent was obtained.

### (Surface treatment of a glass substrate)

One surface of a glass substrate was subjected to rubbing treatment with rubbing rayon (Y-20, product of YOSHIKAWA CHEMICAL CO., LTD.) in one direction. The rubbing-treated surface was immersed in the hydrolysate of the silane coupling agent (a water-containing methanol solution). After one minute, the glass substrate was pulled out of the hydrolysate of the silane coupling agent and was dried at 100°C for 10 minutes. In this manner, the surface treatment of the glass substrate was carried out.

### (Preparation of a polymerizable liquid crystal composition)

100 parts by weight of a polymerizable nematic liquid crystal composition (RMM34, Merck, Germany, the compound of the formula (13) above) containing 20 wt% of 4-cyanophenyl ester of 4-(6-acryloyloxyhexyloxy)benzoic acid was mixed with 5 parts by weight of a photopolymerization initiator (Irgacure 907, 2-methyl-1-[4-(methylthio)phenyl]-2-morpholinopropane)-1-one, Ciba Specialty Chemicals) and 200 parts by weight of propylene glycol monomethyl ether acetate to give a polymerizable liquid crystal composition.

### (Preparation of an optically anisotropic material)

The surface-treated surface of the glass substrate was spin-coated with the polymerizable liquid crystal composition at 100 RPM for 10 seconds and then at 680 RPM for 30 seconds and was left to stand in a thermostatic bath and dried at 60°C for 10 minutes. Subsequently, ultraviolet rays of 365 nm were applied to the dried coating of the polymerizable liquid crystal composition under the conditions of room temperature, an illuminance of 80 mW/cm², and a dose of 1000 mJ/cm² to cure the polymerizable liquid crystal compound. In this manner, an optically anisotropic liquid crystal layer was formed to give an optically anisotropic material.

### Example 2

The same procedure as in Example 1 was performed except that the rubbing treatment was carried out after the surface treatment with the hydrolysate of the silane coupling agent to give an optically anisotropic material.

### Example 3

The same procedure as in Example 1 was performed except that a methacryloxy group-containing trimethoxysilane-based coupling agent (KBM-503 (3-methacryloxypropyltrimethoxysilane), Shin-Etsu Chemical Co., Ltd.) was used in place of the acryloxy group-containing trimethoxysilane-based coupling agent to give an optically anisotropic material.

### Example 4

The same procedure as in Example 1 was performed except that a mercapto group-containing trimethoxysilane-based coupling agent (KBM-803 (3-mercaptopropyltrimethoxysilane), Shin-Etsu Chemical Co., Ltd.) was used in place of the acryloxy group-containing trimethoxysilane-based coupling agent to give an optically anisotropic material.

### Example 5

The same procedure as in Example 1 was performed except that an epoxy group-containing trimethoxysilane-based coupling agent (KBM-403 (3-glycidoxypropyltrimethoxysilane), Shin-Etsu Chemical Co., Ltd.) was used in place of the acryloxy group-containing trimethoxysilane-based coupling agent to give an optically anisotropic material.

### Example 6

The same procedure as in Example 1 was performed except that a vinyl group-containing trimethoxysilane-based coupling agent (KBM-1003 (vinyltrimethoxysilane), Shin-Etsu Chemical Co., Ltd.) was used in place of the acryloxy group-containing trimethoxysilane-based coupling agent to give an optically anisotropic material.

### Example 7

The same procedure as in Example 1 was performed except that an amino group-containing trimethoxysilane-based coupling agent (KBM-903 (3-aminopropyltrimethoxysilane), Shin-Etsu Chemical Co., Ltd.) was used in place of the acryloxy group-containing trimethoxysilane-based coupling agent to give an optically anisotropic material.

### Example 8

The same procedure as in Example 1 was performed except that a saponified triacetyl cellulose substrate (a saponified TAC substrate) (a sample obtained under the following saponified conditions: a TAC film (T80UZ, FUJI FILM Corporation) was immersed in 2N aqueous solution of KOH at 60°C for 5 minutes, neutralized with 0.1N aqueous solution of HCl, and washed with distilled water) in place of the glass substrate to give an optically anisotropic material.

### Example 9

The same procedure as in Example 2 was performed except that a saponified triacetyl cellulose substrate (a saponified TAC substrate) (a sample obtained under the following saponified conditions: a TAC film (T80UZ, FUJI FILM Corporation) was immersed in 2N aqueous solution of KOH at 60°C for 5 minutes, neutralized with 0.1N aqueous solution of HCl, and washed with distilled water) in place of the glass substrate to give an optically anisotropic material.

### Example 10

The same procedure as in Example 3 was performed except that a saponified triacetyl cellulose substrate (a saponified TAC substrate) (a sample obtained under the following saponified conditions: a TAC film (T80UZ, FUJI FILM Corporation) was immersed in 2N aqueous solution of KOH at 60°C for 5 minutes, neutralized with 0.1N aqueous solution of HCl, and washed with distilled water) in place of the glass substrate to give an optically anisotropic material.

### Example 11

The same procedure as in Example 1 was performed except that a saponified triacetyl cellulose substrate (a saponified TAC substrate): a TAC film, T80UZ, FUJI FILM Corporation) was used in place of the glass substrate, and an amino group-containing trimethoxysilane-based coupling agent (KBM-903 (3-aminopropyltrimethoxysilane), Shin-Etsu Silicone Co., Ltd.) was used in place of the acryloxy group-containing trimethoxysilane-based coupling agent to give an optically anisotropic material.

### Comparative Example 1

The same procedure as in Example 1 was performed except that a methanol solution of a silane coupling agent, which was obtained by dissolving in methanol an acryloxy group-containing trimethoxysilane-based coupling agent (KBM-5103, Shin-Etsu Chemical Co., Ltd.) without hydrolysis such that the concentration of the solid content was 2%, was used in place of the hydrolysate of the coupling agent to give an optically anisotropic material.

### Comparative Example 2

The same procedure as in Example 2 was performed except that a methanol solution of a silane coupling agent, which was obtained by dissolving in methanol an acryloxy group-containing trimethoxysilane-based coupling agent (KBM-5103, Shin-Etsu Chemical Co., Ltd.) without hydrolysis such that the concentration of the solid content was 2%, was used in place of the hydrolysate of the coupling agent to give an optically anisotropic material.

### Comparative Example 3

The same procedure as in Example 3 was performed except that a methanol solution of a silane coupling agent, which was obtained by dissolving in methanol a methacryloxy group-containing trimethoxysilane-based coupling agent (KBM-503, Shin-Etsu Chemical Co., Ltd.) without hydrolysis such that the concentration of the solid content was 2%, was used in place of the hydrolysate of the coupling agent to give an optically anisotropic material.

### Comparative Example 4

The same procedure as in Example 4 was performed except that a methanol solution of a silane coupling agent, which was obtained by dissolving in methanol a mercapto group-containing trimethoxysilane-based coupling agent (KBM-803, Shin-Etsu Chemical Co., Ltd.) without hydrolysis such that the concentration of the solid content was 2%, was used in place of the hydrolysate of the coupling agent to give an optically anisotropic material.

### Comparative Example 5

The same procedure as in Example 5 was performed except that a methanol solution of a silane coupling agent, which was obtained by dissolving in methanol an epoxy group-containing trimethoxysilane-based coupling agent (KBM-403, Shin-Etsu Chemical Co., Ltd.) without hydrolysis such that the concentration of the solid content was 2%, was used in place of the hydrolysate of the coupling agent to give an optically anisotropic material.

### Comparative Example 6

The same procedure as in Example 6 was performed except that a methanol solution of a silane coupling agent, which was obtained by dissolving in methanol a vinyl group-containing trimethoxysilane-based coupling agent (KBM-1003, Shin-Etsu Chemical Co., Ltd.) without hydrolysis such that the concentration of the solid content was 2%, was used in place of the hydrolysate of the coupling agent to give an optically anisotropic material.

### Comparative Example 7

The same procedure as in Example 7 was performed except that a methanol solution of a silane coupling agent, which was obtained by dissolving in methanol an amino group-containing trimethoxysilane-based coupling agent (KBM-903, Shin-Etsu Chemical Co., Ltd.) without hydrolysis such that the concentration of the solid content was 2%, was used in place of the hydrolysate of the coupling agent to give an optically anisotropic material.

### Comparative Example 8

The same procedure as in Example 8 was performed except that a methanol solution of a silane coupling agent, which was obtained by dissolving in methanol an acryloxy group-containing trimethoxysilane-based coupling agent (KBM-5103, Shin-Etsu Chemical Co., Ltd.) without hydrolysis such that the concentration of the solid content was 2%, was used in place of the hydrolysate of the coupling agent to give an optically anisotropic material.

### Comparative Example 9

The same procedure as in Example 9 was performed except that a methanol solution of a silane coupling agent, which was obtained by dissolving in methanol an acryloxy group-containing trimethoxysilane-based coupling agent (KBM-5103, Shin-Etsu Chemical Co., Ltd.) without hydrolysis such that the concentration of the solid content was 2%, was used in place of the hydrolysate of the coupling agent to give an optically anisotropic material.

### Comparative Example 10

The same procedure as in Example 10 was performed except that a methanol solution of a silane coupling agent, which was obtained by dissolving in methanol a methacryloxy group-containing trimethoxysilane-based coupling agent (KBM-503, Shin-Etsu Chemical Co., Ltd.) without hydrolysis such that the concentration of the solid content was 2%, was used in place of the hydrolysate of the coupling agent to give an optically anisotropic material.

### Comparative Example 11

The same procedure as in Example 11 was performed except that a methanol solution of a silane coupling agent, which was obtained by dissolving in methanol an amino group-containing trimethoxysilane-based coupling agent (KBM-903, Shin-Etsu Chemical Co., Ltd.) without hydrolysis such that the concentration of the solid content was 2%, was used in place of the hydrolysate of the coupling agent to give an optically anisotropic material.

### Comparative Example 12

The same procedure as in Example 1 was performed except that the surface treatment operation with the hydrolysate of the coupling agent was omitted to give an optically anisotropic material.

### Comparative Example 13

The same procedure as in Example 6 was performed except that the surface treatment operation with the hydrolysate of the coupling agent was omitted to give an optically anisotropic material.

### Evaluation

The obtained optically anisotropic materials were evaluated for the adhesion properties of the optically anisotropic liquid crystal layer with respect to the substrate and the liquid crystal alignment (horizontal (homogeneous) alignment) state of the optically anisotropic liquid crystal layer by means of a visual inspection method. More specifically, each of the obtained homogeneously aligned liquid crystal optically anisotropic film samples was held between two polarizing plates arranged in a crossed nicols fashion so as to form an angle of 45° with respect to the optical axis of the polarizing plates, and the sample was observed from the front and in a state in which the film was inclined. When the liquid crystal sample was observed from the front, light transmission was observed since phase retardation occurs in the liquid crystal film sample. Meanwhile, when the liquid crystal sample was observed in a state in which the film was inclined at right and left oblique angles, the degree of change (decrease) in the amount of the observed transmission light was the same at the right and left oblique angles since the retardation amounts of the liquid crystal film at the right and left oblique angles decrease to the same extent.

### Evaluation of adhesion properties

According to JIS K5400, cuts at horizontal and vertical intervals of 1 mm were formed with a cutter in a 10 mm square region in the optically anisotropic liquid crystal layer of each of the optically anisotropic material samples, and the region was divided into 100 subregions. A cellophane adhesion tape defined in JIS Z 1522 was applied to the 10 mm square region and was peeled to evaluate the adhesion properties. The sample was judged as good in the case in which none of the 100 subregions was peeled (100/100) and was judged as poor in the other cases. The obtained results are shown in Table 1.

### Evaluation of the liquid crystal alignment state

### (Visual inspection method)

Each of the horizontally aligned optically anisotropic material samples was held between two polarizers arranged in a crossed nicols fashion and observed from the front to evaluate whether or not uniform light transmission was observed. The sample was judged as "good", when uniform light transmission was observed and judged as "poor", when light transmission was nonuniform. Further, the sample was judged as "moderate", when irregular alignment was observed but had no practical problem.

**[Table 1]**

| | Silane coupling agent | | Substrate type | Adhesion properties | Liquid crystal alignment state |
|---|---|---|---|---|---|
| | Functional group | Hydrolysis | | | |
| Example 1 | Acryloxy group | Yes | Glass substrate | good | good |
| Example 2 | Acryloxy group | Yes | Glass substrate | good | good |
| Example 3 | Methacryloxy group | Yes | Glass substrate | good | good |
| Example 4 | Mercapto group | Yes | Glass substrate | good | good |
| Example 5 | Epoxy group | Yes | Glass substrate | good | good |
| Example 6 | Vinyl group | Yes | Glass substrate | good | moderate |
| Example 7 | Amino group | Yes | Glass substrate | good | moderate |
| Example 8 | Acryloxy group | Yes | Saponified TAC | good | good |
| Example 9 | Acryloxy group | Yes | Saponified TAC | good | good |
| Example 10 | Methacryloxy group | Yes | Saponified TAC | good | good |
| Example 11 | Amino group | Yes | Saponified TAC | good | good |
| Comparative Example 1 | Acryloxy group | No | Glass substrate | poor | poor |
| Comparative Example 2 | Acryloxy group | No | Glass substrate | poor | poor |
| Comparative Example 3 | Methacryloxy group | No | Glass substrate | poor | poor |
| Comparative Example 4 | Mercapto group | No | Glass substrate | poor | poor |
| Comparative Example 5 | Epoxy group | No | Glass substrate | poor | poor |
| Comparative Example 6 | Vinyl group | No | Glass substrate | poor | poor |
| Comparative Example 7 | Amino group | No | Glass substrate | poor | poor |
| Comparative Example 8 | Acryloxy group | No | Saponified TAC | poor | poor |
| Comparative Example 9 | Acryloxy group | No | Saponified TAC | poor | poor |
| Comparative Example 10 | Methacryloxy group | No | Saponified TAC | poor | poor |
| Comparative Example 11 | Amino group | No | Saponified TAC | poor | poor |
| Comparative Example 12 | No surface treatment | - | Glass substrate | poor | poor |
| Comparative Example 13 | No surface treatment | - | Glass substrate | poor | poor |

As can be seen from Table 1, good adhesion properties and a good liquid crystal alignment state were achieved in the glass substrates when the surface treatment was carried out by using the hydrolysate of the silane coupling agent having an acryloxy group, a methacryloxy group, a mercapto group, or an epoxy group. Further, when the surface treatment was carried out by using the hydrolysate of the silane coupling agent having a vinyl group or an amino group, the liquid alignment state was slightly impaired.

In addition to this, good adhesion properties and a good liquid crystal alignment state were achieved in the saponified TAC substrates when the surface treatment was carried out by using the hydrolysate of the silane coupling agent having an acryloxy group, a methacryloxy group, or an amino group.

Moreover, when the surface treatment was carried out by using the silane coupling agent without hydrolysis, the adhesion properties and the liquid crystal alignment state were impaired in all the glass substrates and saponified substrates.

### INDUSTRIAL APPLICABILITY

In the present invention, since a hydrolysate of an alkoxysilane compound is applied to a substrate during manufacturing of an optically anisotropic material, an optically anisotropic liquid crystal layer with good adhesion properties and without irregular alignment can be formed on the substrate. Therefore, the optically anisotropic material, alone or in combination with other films, can be preferably used as retardation films, viewing angle compensation films, color compensation films, and elliptically polarizing films and is useful in liquid crystal display devices.

## Claims

1. A method for manufacturing an optically anisotropic material having an optically anisotropic liquid crystal layer formed on a substrate, the method comprising: subjecting a surface of the substrate to rubbing treatment; subjecting the rubbing-treated surface to surface treatment with a hydrolysate of an alkoxysilane compound; applying a polymerizable nematic liquid crystal composition to the surface-treated surface; aligning the applied polymerizable liquid crystal composition; and subjecting the polymerizable liquid crystal composition to curing treatment while the aligned state thereof is maintained, whereby the optically anisotropic liquid crystal layer is formed.

2. A method for manufacturing an optically anisotropic material having an optically anisotropic liquid crystal layer formed on a substrate, the method comprising: subjecting a surface of the substrate to surface treatment with a hydrolysate of an alkoxysilane compound; subjecting the surface-treated surface to rubbing treatment; applying a polymerizable nematic liquid crystal composition to the rubbing-treated surface; aligning the applied polymerizable liquid crystal composition; and subjecting the polymerizable liquid crystal composition to curing treatment while the aligned state thereof is maintained, whereby the optically anisotropic liquid crystal layer is formed.

3. The manufacturing method according to claim 1 or 2, wherein the alkoxysilane compound has a functional group that is any of an acryloxy group, a methacryloxy group, a mercapto group, an epoxy group, and an amino group.

4. The manufacturing method according to claim 3, wherein the functional group is an acryloxy group or a methacryloxy group.

5. The manufacturing method according to any of claims 1 to 4, wherein the substrate is glass substrate or a saponified triacetyl cellulose substrate.

6. The manufacturing method according to claim 1, wherein the polymerizable liquid crystal compound includes a compound represented by the general formula (1), 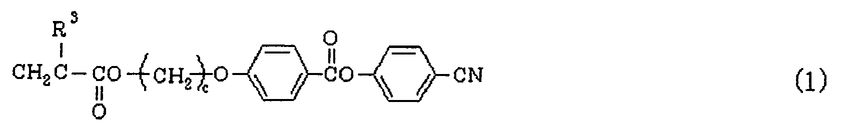 wherein R³ is hydrogen or a methyl group, and c is an integer of 2 to 12.

7. An optically anisotropic material obtained by the manufacturing method according to claim 1 or 2.

8. A liquid crystal display device comprising a liquid crystal panel, and the optically anisotropic material obtained by the manufacturing method according to claim 1 or 2, the optically anisotropic material provided on at least one side of the liquid crystal panel.
